# EUROPEAN PATENT SPECIFICATION

(11) **EP 2 497 981 B1**
(45) Date of publication and mention of the grant of the patent: **13.11.2013**
(21) Application number: 12158330.6
(22) Date of filing: 06.03.2012
(51) Int. Cl.: F16K 15/03, F16K 17/30, F16K 17/34, F16K 1/20

(54) **Safety valve for gas pipelines**
Sicherheitsventil für Gasleitungen
Valve de sécurité pour conduites de gaz

(30) Priority: 07.03.2011 IT PD20110074
(43) Date of publication of application: 12.09.2012
(73) Proprietor: Eurostandard S.p.A., 38038 Tesero (TN) (IT)
(72) Inventor: Zeni, Marisa, I-38033 Cavalese (TN) (IT); Fontanazzi, Giuseppe, I-38033 Cavalese (TN) (IT); Raffaelli, Sara, I-38030 Varena (TN) (IT)
(74) Representative: Gallo, Luca

(56) References cited:
- WO-A1-2010/130724
- US-A- 5 004 010
- US-A1- 2008 066 806

## Description

### Field of application

The present invention refers to a safety valve for gas pipelines, according to the preamble of the main independent claim.

The present safety valve is intended to be used in the distribution networks of the gas for automatically blocking the gas flow in the presence of failures, i.e. when the flow rate of the gas exceeds a pre-established threshold value due to the failure.

The present invention is therefore situated in the field of the obtainment and installation of gas distribution networks and in particular in the industrial field of the production of connectors and automatic devices for intercepting gas leaks in order to ensure the safety of the users.

### State of the art

As is known, the safety valves in the above-indicated field are usually mounted in the secondary pipelines close to their connection to a main pipeline.

The valves thus positioned are capable of automatically intercepting the gas flow in the secondary pipeline in case of leaks that can occur following accidental breakage or failure of the secondary pipelines, where a failure event is most likely to occur.

One of the most common causes of gas leaks lies in the breakage of a secondary pipeline caused by the installation of other embedded services, e.g. during the excavation for the installation or maintenance of sewer systems, hydraulic plants, electric plants or other systems.

Gas leaks are potentially dangerous for people; they also contribute to environmental pollution.

In normal operating conditions, the pressure inside the gas distribution networks is substantially at the same value. Therefore, in the flow rate range for which the secondary pipelines are sized, the pressure inside the main pipeline is equal to that inside the secondary pipelines placed in shunt from the main pipeline.

In such normal operating conditions, the valve is set in a provided open position, in which it allows the free flow of the gas from the main pipeline to the secondary pipeline.

Otherwise, when the safety valve is placed in the secondary pipeline downstream of the section in which a considerable and sudden variation of the gas pressure is verified, due to a sudden increase of the gas speed caused by the breakage of the tubing of the secondary pipeline, the valve is subjected to a pressure jump that determines its movement into a provided closed position, in which it interrupts or reduces the passage of the gas to non-dangerous levels.

Functionally, the safety valves must be automatically closed, passing from the aforesaid open position to the aforesaid closed position in a fraction of a second, when the pressure of the secondary duct downstream of the valve descends below a pre-established value.

Typically, for example, the gas flow is blocked by the safety valve, if the secondary pipeline has a failure that involves a leakage section with size equal to at least 5-15% with respect to the cross section.

Generally, safety valves are housed inside the secondary pipeline at the connection with the main pipeline and more particularly are mounted between two secondary pipeline portions by means of an electroweldable coupler sleeve.

Currently, different types of safety valves are present on the market, aimed to minimize the risk of gas losses due to failures in the secondary pipelines. Such valves are usually all provided with a support body, normally with tubular shape, coaxially mounted inside the secondary pipeline, which coaxially sustains a piston at its interior that is susceptible to slide along the axis of the pipeline and the valve.

Such safety valves have a behavior similar to that of the Venturi tube, having a narrowing downstream of the movable piston that causes an increase of the gas speed.

The piston is maintained in the open position during the normal functioning of the pipeline by a calibrated spring, which compensates for the pressure variation between the two sections: that of the enlarged section of the pipeline and that of the narrowed section of the valve.

The valve is closed after an increase of the pressure variation, and consequent increase of the gas speed downstream of the same.

More in detail, the sliding of the piston occurs between the open position, in which the piston allows the passage of the gas during the normal operation of the network, and the closed position, in which the piston, in case of failure, is set in contact with a ledge obtained in the chamber in order to interrupt the gas flow.

A loss of gas from the secondary pipeline is translated into an increase of the pressure difference on the piston; by overcoming the force exerted on the piston by the spring, such pressure difference causes the passage of the piston from the open position to the closed position.

The spring, in addition to the function of compensation of the moments in normal gas distribution operation, also performs the task of setting the safety threshold at which the valve closure will intervene, for an unexpected leakage of the gas.

In the calculation of the safety threshold, i.e. of the force which the spring must exert, the actual functioning conditions of the valve are considered (with compressible fluids and non-stationary motion) which come to modify the theoretical calculation parameters with suitable corrective factors.

Some safety valves widespread on the market, of the type briefly described above, are described in detail in the patents US4010770, WO 0188420, EP 686795 and US 4590962, for example.

More in detail, the valve described in the patent US4010770 provides for the use of a ball as a piston for interrupting the gas flow and of one or more metal springs for adjusting the position of the ball.

The valve described in the patent WO 0188420 provides for the use of a hollow piston having one portion with substantially cylindrical form facing towards the inner wall of the main body, and a head portion with rounded form, connected without interruption to the cylindrical portion and provided with a gasket adapted to seal the ledge of the main body. The ledge is obtained by means of a narrowing of the inner section.

The passage of the gas towards the valve during the normal operation of the network is ensured by a hole obtained on the rounded portion of the piston which affects the entire section of the chamber.

The spring is interposed between two shoulders, one obtained at the base of the cylindrical portion of the piston and the other in the wall of the chamber of the main body.

The patent EP 0686795 describes a safety valve that provides for the use of a rigid body, in which a cone-shaped chamber is provided that has a narrowing at one end. The valve is provided with a piston with pointed shape, with greater diameter than the narrowing of the chamber, susceptible to sliding inside the rigid body against the force of a spring in order to be abutted against the narrowing of the housing.

In practice, the safety valves of the above-described known type do not lack drawbacks.

A first drawback lies in the fact that the coaxial position of the piston, centered with respect to the pipeline section, i.e. where the speed of the gas is greater, causes considerable pressure losses.

Such position of the piston for intercepting the central flow of the gas is maintained during the normal functioning condition of the distribution network, and therefore causes - even in the presence of pistons with particularly tapered shape - the formation of considerable turbulence and then finally a non-negligible pressure loss.

A further drawback of the safety valves of known type lies in the fact that the impurities present in the conveyed gas flow can easily adhere to the piston placed to intercept the gas flow and thus prevent its correct functioning in case of failure. The same impurity deposits on the pistons also further increase the pressure losses.

The patent US 2008/066806 A1 describes a safety valve according to the preamble of claim 1.

### Presentation of the invention

The main object of the present invention is therefore that of overcoming the drawbacks manifested by the above-described prior art solutions, by providing a safety valve for gas pipelines which involves a reduced pressure loss.

Another object of the present finding is to provide a safety valve for gas pipelines which does not collect, or collects in a reduced manner, possible impurities that are conveyed by the gas flow.

Another object of the present finding is to provide a safety valve for gas pipelines whose functioning is simple and whose operation is entirely reliable.

A further object of the present finding is to provide a safety valve for gas pipelines which maintains its mechanical characteristics and its functionality unchanged over time.

A further object of the present finding is to provide a safety valve for gas pipelines which is inexpensive and easy to manufacture.

### Brief description of the drawings

The technical characteristics of the finding, according to the aforesaid objects, can be clearly seen in the contents of the claims reported below, and the advantages of the same will be clearer in the following detailed description, made with reference to the enclosed drawings, which represent a merely exemplifying and non-limiting embodiment thereof, in which:

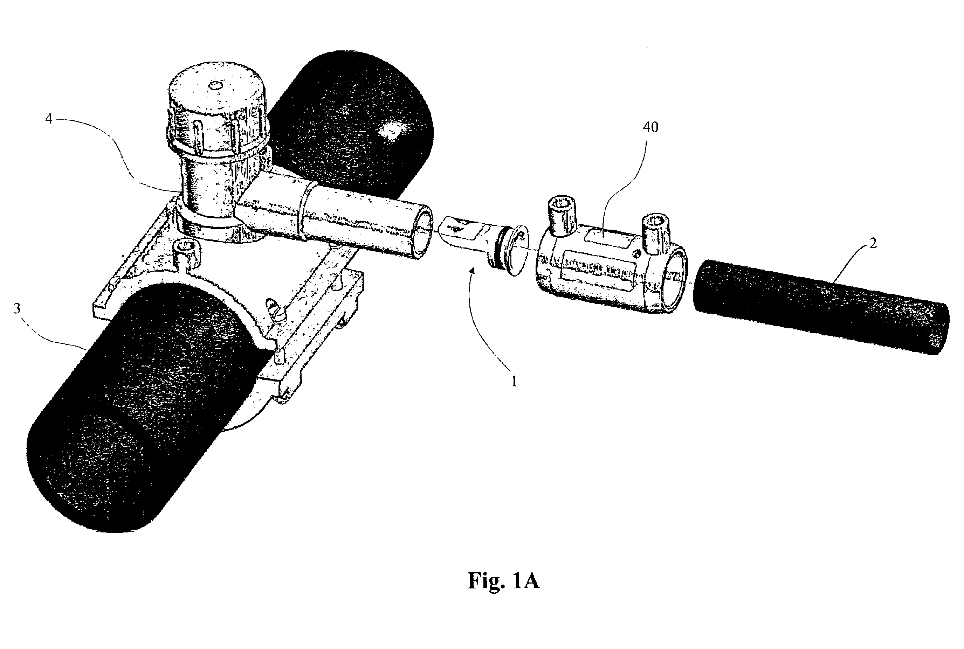

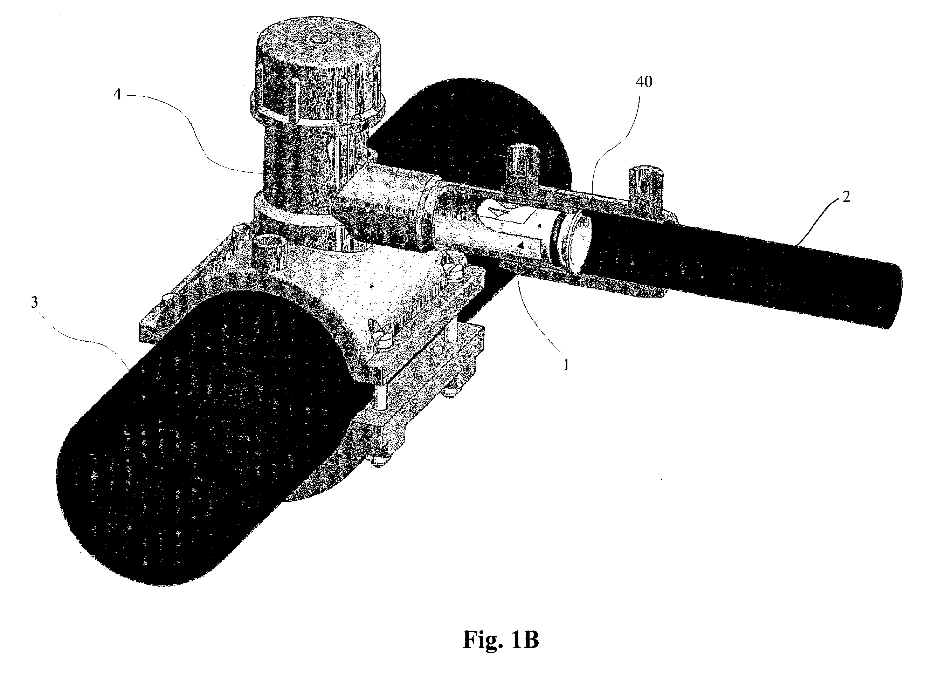

**FIGURES 1A** **and** **1B** show the safety valve, object of the present invention, mounted inside a pipeline for gas distribution, respectively in exploded perspective view and in a perspective view with some parts in section in order to better illustrate other parts;
**FIG. 2** shows a first valve embodiment according to the present invention, in a front perspective view with a door provided in open position;
**FIG. 3** shows the valve of figure 2 in top perspective view with the door in open position;
**FIG. 4** shows the valve of figure 2 in a front perspective view with the door in closed position;
**FIG. 5** shows the valve of figure 2 in a rear perspective view with the door in closed position.
**FIG. 6** shows a second valve embodiment according to the present invention, in a frontal view with the door in open position;
**FIG. 7** shows the valve of figure 6, in longitudinal section carried out along the trace VII-VII of figure 6 with the door in open position;

### Detailed description of several preferred embodiments

With reference to the enclosed drawings, the safety valve for gas pipelines, object of the present invention, is indicated in its entirety with 1.

The safety valve 1 is intended to be mounted inside a pipeline 2 of a gas distribution network and more particularly inside secondary pipelines placed in shunt from a main pipeline 3 and aimed to feed users such as homes, companies, offices etc.

Preferably, the safety valve 1 is inserted at a section of the secondary pipeline 2, between two sections of the latter and more precisely it is usually interposed, in a *per se* known manner, between the downstream end of an initial section of the secondary pipeline 2 which is extended from the main pipeline 3 by means of a sleeve 4 fixed to the latter, and the upstream end of the remaining final section, with much greater length than the initial section, and having the task of conveying a gas flow from the main pipeline 3 to the users.

The two ends of the two sections of the secondary pipeline 2 are joined together with the safety valve 1 interposed by means of an electroweldable coupler 40.

Without departing from the protective scope of the present patent, the safety valve 1 that is the object of the present invention can also be interposed in any one other position between any two sections of a pipeline 2 for the gas transport and distribution, though below for the sake of simplicity reference will first of all be made to the more frequent case: that it is inserted in a secondary pipeline 2 for the transportation of the gas.

The safety valve 1 according to the invention is therefore adapted to intercept the gas flow in case of leaks that can occur downstream of its section of insertion in the secondary pipeline 2.

More in detail, the safety valve 1 comprises a support structure 5, which is intended to be fixed inside the secondary pipeline 2 and is formed by a tubular body 6, intended to be coaxially sealingly mounted on the inner surface of the secondary pipeline 2, and by an appendage 7, which is axially extended in projection from the tubular body 6.

Advantageously, the tubular body 6 and the appendage 7 are obtained in a single body made of plastic material.

The tubular body 6 terminates at one end thereof with a first edge 8 (intended to be facing towards the initial segment of the secondary pipeline 2), with preferably flared shape, and from one base segment 9 the aforesaid appendage 7 is extended; the tubular body 6 terminates at the other end thereof with a second edge 10 (intended to be facing towards the final segment of the secondary pipeline 2), from which an annular lip 11 is extended that is susceptible to abut against mouth of a section of the secondary pipeline 2, in particular its initial segment.

The seal of the tubular body 6 on the inner surface of the secondary pipeline 2 is ensured by a first gasket 12, mounted outside the tubular body 6 and preferably in a seat 13 defined between an undercut 14 obtained underneath the first edge 8 and an annular rib 15, which projects from the outer surface of the same tubular body 6.

The safety valve 1 is then inserted inside the secondary pipeline 2 in a manner so as to convey the gas flow to cross through the provided through hole 16 of the tubular body 6.

The safety valve 1 is extended in the direction of the axis Y of the tubular body 6, coinciding with the axis of the secondary pipeline 2 in which the valve 1 is inserted, in a manner such that it is arranged next to the inner surface of the same pipeline 2.

The appendage 7 with its bulk reduces the passage section of the gas flow of the secondary pipeline 2; such section is therefore greater at the undisturbed section placed upstream of the appendage 7 than at the appendage 7 (i.e. than at the section along the entire valve 1).

The appendage 7 is therefore axially extended from the base section 9 (particularly in the shape of an annular sector) of the first edge 8 of the tubular body 6 up to a free end 17 that is arranged, with the valve 1 mounted in the secondary pipeline 2, at a substantially undisturbed section of the gas flow of the same pipeline 2.

The appendage 7 preferably has the shape of a tongue with the free end 17 tapered in order to reduce the pressure losses, and is provided with an inner surface 18, facing towards the axis Y of the tubular body 6, and an outer surface 19, which is facing towards the pipeline 2 with the valve 1 inserted in the latter.

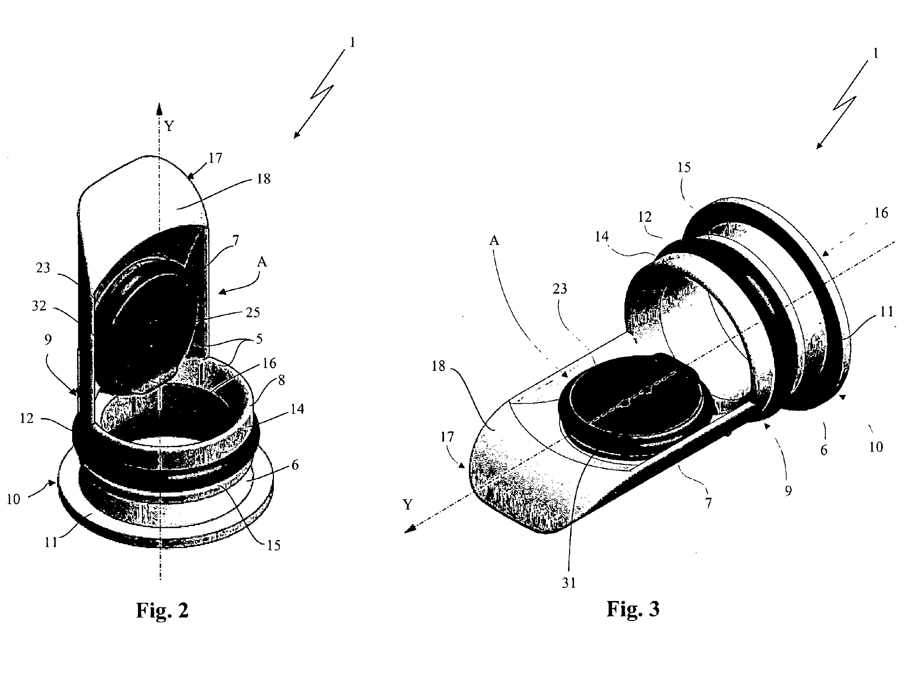

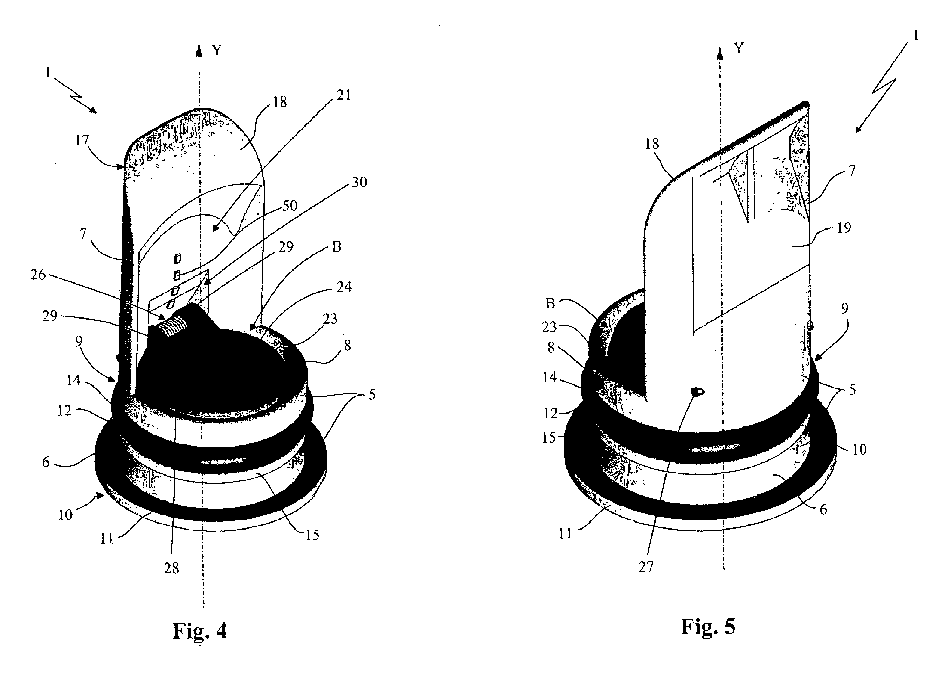

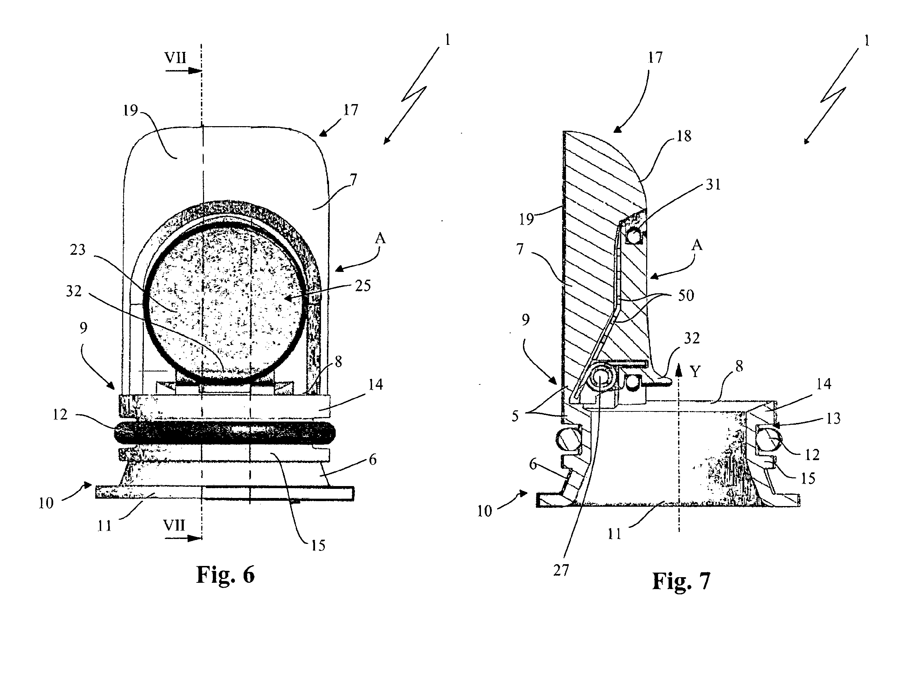

The outer surface 19 of the appendage 7 is preferably curved. The same appendage 7 can be obtained with a thinned wall provided with reinforcement ribs in accordance with a first embodiment illustrated in figures 2-5, i.e. with full body with preferably counter-shaped form with respect to the inner surface of the pipeline 2 in which the safety valve 1 in accordance with the second embodiment illustrated in figures 6-7 is intended to be housed.

According to the invention, the safety valve 1 also comprises a door 23 hinged to the support structure 5 at the tubular body 6, provided with an outer face 24 substantially facing towards the appendage 7 and an inner face 25 facing towards the tubular body 6.

The appendage 7 is furthermore advantageously provided with a seat 21, which is obtained at the inner surface 18 and which is shaped in order to house the aforesaid door 23 at its interior.

More in detail, the door 23 is movable between an open position A, in which it is arranged next to the appendage 7 and it is inserted in the seat 21 with its outer face 24 facing towards the bottom of the seat 21, and a closed position B, in which it is placed so as to close the tubular body 6 for intercepting the gas flow.

Elastically yieldable means 26 act on the door 23 in order to force it with an elastic moment towards the open position A.

Advantageously, the elastically yieldable means 26 are obtained with a spring, preferably of helical type, wound around a pin 27 hinged on the support structure 5, preferably at the base of the appendage 7, and provided with one end in abutment against the support structure 5 and with one end acting against the door 23.

In accordance with a preferred embodiment of the present invention, the door 23 is provided with at least one protruding flap 28, which defines a seat for housing the spring 26 between two shoulders 29. Such flap 28 is inserted in a niche 30 obtained at the base of the appendage 7 underneath the through opening. The pin 27 crosses through the two shoulders 29, transversely with respect to the axis Y of the tubular body 6, and is pivoted on the side faces of the niche 30.

In accordance with the idea underlying the present invention, a projection 32 is further provided for, which is extended from the inner face 25 of the door 23 and is susceptible to interfere with the gas flow when the door 23 is in the open position A, generating a drive moment which acts in order to rotate the door 23 towards the closed position B.

The projection 32 therefore projects from the seat 21 and intercepts the gas flow, causing the drive moment with its thrust. In normal operating conditions, such drive moment is jointly balanced by the moment due to the pressures of the gas flow on the faces 24, 25 of the door 23, and by the elastic moment exerted by the spring 26. Such drive moment increases with the increase of the gas flow, and once a threshold value has been exceeded it causes the passage of the door 23 from the open position A to the closed position B.

More in detail, in accordance with the above-described mechanical configuration, the door 23 is subjected: to a first moment intended to rotate it towards the open position A generated by the pressure of the gas flow on the inner face 25 of the door 23 itself; by a second moment, smaller than the first, intended to rotate the door 23 towards the closed position B, generated by the pressure of the gas flow on the outer face 24 of the door 23 and which arrives behind the door 23 through small clearances; an elastic moment intended to rotate the door 23 towards the open position A; and the aforesaid drive moment produced by the thrust of the flow on the projection 32 of the door 23.

Operatively, the door 23 is susceptible to be moved between the open position A and the closed position B following an increase of flow through the safety valve 1, due in particular to a failure event in the secondary pipeline 2 downstream of the safety valve 1 itself.

More in detail, the door 23 is adapted to remain in open position A, in normal operating conditions, i.e. if the gas flow in the pipeline 2 is less than a threshold value. In such condition, the gas flow generates a drive moment that is less than the sum of the moment produced by the pressures of the gas flow on the door 23 and the elastic moment produced by the spring 26, and therefore the door 23 is stably maintained in the open position A, allowing the outflow of gas into the secondary pipeline 2.

The door 23 is instead suitable to be moved into closed position B in the presence of a failure event in the secondary pipeline 2 downstream of the safety valve 1, i.e. in the presence of a gas flow in the same pipeline 2 greater than the threshold value. In such condition, the gas flow generates a drive moment on the door 23 greater than the sum of the moment produced by the pressures of the gas flow on the door 23 and the elastic moment of the spring 26, thus involving the sudden movement of the door 23 into the closed position B.

The size of the projection 32 is calibrated in order to interfere in a measured manner with the gas flow and to overcome the moments of the spring 6 and of the pressures by forcing the door 23 to be closed if the aforesaid threshold value is exceeded.

The size and the mechanical resistance of the spring 26 are calibrated in order to ensure, on one hand, a correct mechanical functioning of the spring 26 over time, (such spring must therefore have minimum size intended to allow a sufficient life cycle); on the other hand, they are calibrated so as to not require an excessive projection 32 for overcoming the moment generated by the spring 26 in case of failure, as such excessive projection would lead to considerable pressure losses.

The pressures on the two faces 24, 25 of the door 23 can be substantially compensated, so as to have a negligible role in the calculation of the moments to design in order to allow the closure of the door 23 upon exceeding a precise threshold value.

Therefore, in the following description and claims, the moment due to the pressures can even be zero, with small size, i.e. susceptible to assisting the spring 26 for maintaining the door 23 in open position A.

The pressure difference between the two faces 24, 25 of the door 23 is mainly due to the pressure losses in the passage of the gas behind the door 23.

In accordance with a preferred characteristic of the safety valve 1, object of the present invention, the valve 1 comprises spacer means 50 positioned on the outer face 24 of the door 23 or on the bottom of the seat 21, and adapted to separate the door 23 from the bottom of the seat 21 by preventing the establishment of reduced pressure intended to make the door 23 adhere to the seat 21 itself.

Advantageously, such spacer means 50 are obtained with ribs, appendages, feet or reliefs projecting from the outer face 24 of the door 23 or from the bottom of the seat 21. In other words, more generally, the spacer means 50 are obtained by shaping the outer face 24 of the door 23 with a surface susceptible to be maintained spaced from the bottom of the seat 21, allowing the arrival of a sufficient gas volume behind the door 23 intended to prevent the formation of reduced pressure suitable for holding the door 23 constrained to the seat 21.

The occurrence of a failure event causes an increase of the gas flow through the safety valve 1, with the formation of a consequent drive moment that increases considerably, and by overcoming the moment of the spring 26 (and possibly that produced by the pressure forces on the faces of the door 23) such event leads to the closure of the door 23 itself.

In accordance with a preferred characteristic of the present invention, the door 23 when arranged in open position A is introduced in the seat 21 to a depth which shelters it from the gas flow, except for the projection 32 which is extended outside the seat 21, interfering with the gas flow.

As soon as the failure event occurs and the moment of the spring 26 is no longer able to balance the drive moment due to the thrust of the gas flow on such projection 32 of the door 23, the latter is moved, rotating into a position for intercepting the flow, which then rapidly drives the door into the closed position B on the first flared edge 8 of the tubular body 6.

Advantageously, the door 23, preferably with circular shape, bears a second gasket 31 mounted in an annular manner on its thickness, such gasket suitable for sealing on the flared edge 8 of the tubular body 6.

The finding thus conceived therefore achieves the pre-established objects.

## Claims

1. Safety valve (1) for gas pipelines, intended to be inserted in a gas pipeline (2) for intercepting the flow of gas in case of leaks downstream of said safety valve (1), comprising:
• a support structure (5), which is intended to be fixed inside said gas pipeline (2), and provided with:
- a tubular body (6) intended to be coaxially sealingly mounted on the inner surface of said pipeline (2) and to be crossed by said gas flow, and
- an appendage (7) which is axially extended from said tubular body (6), having an inner surface (18) facing towards the axis of said tubular body (6) and an outer surface (19) intended to face towards the inner surface of said pipeline (2),
• a door (23) hinged to said support structure (5) at said tubular body (6), provided with an outer face (24) facing towards said appendage (7) and an inner face (25) facing towards said tubular body (6), movable between an open position (A), in which it is arranged next to said appendage (7), and a closed position (B), in which it is arranged so as to close said tubular body (6) for intercepting said gas flow;
• elastically yieldable means (26) acting on said door (23) in order to force it with an elastic moment towards said open position (A);
said door (23) being subjected to at least:
- one elastic moment intended to rotate said door (23) towards said open position (A);
**characterized in that** said tool (23) is additionally subjected to:
- one drive moment intended to rotate said door (23) towards said closed position (B), generated by the thrust of said gas flow on a projection (32) being extended from the inner face (25) of said door (23), which with said door (23) in open position (A) is susceptible to interfere with said gas flow that moves through said safety valve (1).

2. Safety valve (1) according to claim 1, **characterized in that** said door (23) is further subjected to a moment intended to rotate said door (23) towards said open position (A), generated by the pressures of said gas flow on said door (23).

3. Safety valve (1) according to claim 2, **characterized in that** said door (23) is adapted to remain in open position (A) with a gas flow through said safety valve (1) that is less than a threshold value, susceptible to generate a drive moment less than the sum of the moment produced by the pressures of said gas flow on said door (23) and the elastic moment produced by said elastically yieldable means (26).

4. Safety valve (1) according to claim 2, **characterized in that** said door (23) is susceptible to be moved from said open position (A) to said closed position (B) following an increase of the gas flow, through said safety valve (1), greater than a threshold value, in particular produced by a failure event in the pipeline (2) downstream of said safety valve (1) itself, to which a drive moment on said door (23) corresponds that is higher than the sum of the moment produced by the pressures of said gas flow on said door (1) and the elastic moment of said elastically yieldable means (26).

5. Safety valve (1) according to any one of the preceding claims, **characterized in that** the appendage (7) is provided with a seat (21) obtained at said inner surface (18), susceptible to house said door (23) in open position (A).

6. Safety valve (1) according to claim 5, **characterized in that** said door (23) in said open position (A) is introduced in said seat (21) to a depth which shelters it from said gas flow.

7. Safety valve (1) according to any one of the preceding claims, **characterized in that** the free end (17) of the appendage (7) is tapered in order to reduce the pressure losses.

8. Safety valve (1) according to any one of the preceding claims, **characterized in that** the outer surface (19) of said appendage (7) is substantially counter-shaped with respect to the inner surface of the pipeline (2) in which said safety valve (1) is susceptible to be inserted.

9. Safety valve (1) according to claim 5, **characterized in that** it comprises spacer means (50) positioned on the outer face (24) of said door (23) or on the bottom of said seat (21), which are suitable for separating said door (23) from the bottom of said seat (21).

10. Safety valve (1) according to claim 9, **characterized in that** said spacer means (50) are constituted by ribs, appendages or feet projecting from the outer face (24) of said door (23) or from the bottom of said seat (21).

11. Safety valve (1) according to any one of the preceding claims, **characterized in that** said door (23) is provided with at least one protruding flap (28), which is housed in a niche (30) obtained at the base of said appendage (7); at least one pin (27) being provided pivoted on side faces of said niche (30) and inserted in a through hole transversely obtained in said flap (28).

12. Safety valve (1) according to any one of the preceding claims, **characterized in that** said tubular body (6) is provided with a first edge (8) from which said appendage (7) is extended, said edge (8) provided with a flared shape.

13. Safety valve (1) according to claim 12, **characterized in that** said tubular body (6) bears a first gasket (12) externally mounted, in particular inserted in a annular seat (13) defined between an undercut (14) obtained underneath said first edge (8) and an annular rib (15) externally projecting from said tubular body (6), suitable for sealing the inner surface of said pipeline (2).

14. Safety valve (1) according to any one of the preceding claims, **characterized in that** said tubular body (6) is provided with a second edge (10) from which an annular lip (11) is extended which is susceptible to abut against the mouth of a section of said gas pipeline (2).

15. Safety valve (1) according to claim 12, **characterized in that** said door (23) bears a second gasket (31) mounted in an annular manner, suitable for sealing said door (23) in closed position (B) on said first flared edge (8) of said tubular body (6).

## Patentansprüche

1. Sicherheitsventil (1) für Gasleitungen, das dazu bestimmt ist, in eine Gasrohrleitung (2) eingesetzt zu werden, um den Gasfluss im Fall von Verlusten nach dem genannten Sicherheitsventil (1) zu erfassen, und Folgendes umfasst:
• eine Trägerstruktur (5), die dazu bestimmt ist, innen an der genannten Gasrohrleitung (2) befestigt zu werden und mit Folgendem versehen ist:
- einem Rohrkörper (6), der dazu bestimmt ist, koaxial gasdicht auf der Innenfläche der genannten Rohrleitung (2) montiert zu werden und durch den der genannte Gasfluss strömt
- einem Zusatzstück (7), das axial von dem genannten Rohrkörper (6) ausgeht, eine zur Achse des genannten Rohrkörpers (6) gewandte Innenfläche (18) und eine Außenfläche (19) hat, die dazu bestimmt ist, sich zur Innenfläche der genannten Rohrleitung (2) zu richten,
• einer Klappe (23), die an der genannten Trägerstruktur (5) auf dem genannten Rohrkörper (6) verankert und mit einer Außenfläche (24) ausgestattet ist, die zu dem genannten Zusatzstück (7) gewandt und einer Innenfläche (25), die zu dem genannten Rohrkörper (6) gerichtet ist, und sich zwischen einer geöffneten Position (A), in der sie sich neben dem genannten Zusatzstück (7) befindet, und einer geschlossenen Position (B), in der sie den genannten Rohrkörper (6) zum Erfassen des genannten Gasflusses schließt, bewegen kann;
• elastisch nachgiebige Elemente (26), die auf die genannte Klappe (23) wirken, um sie mit
einem elastischen Moment in Richtung der genannten geöffneten Position (A) zu schieben;
wobei auf die genannte Klappe (23) mindestens Folgendes wirkt:
- ein elastisches Moment, das die genannte Klappe (23) in die genannte geöffnete Position (A) drehen soll;
**dadurch gekennzeichnet, dass** die genannte Klappe (23) außerdem Folgendem ausgesetzt ist:
- einem Betätigungsmoment, das die genannte Klappe (23) in die genannte geschlossene Position (B) drehen soll, das durch den Druck des genannten Gasflusses auf einen Vorsprung (32) erzeugt wird, der von der Innenfläche (25) der genannten Klappe (23) ausgeht, die bei genannter Klappe (23) in geöffneter Position (A) geeignet ist, den genannten Gasfluss zu behindern, der durch das genannte Sicherheitsventil (1) fließt.

2. Sicherheitsventil (1) nach Anspruch 1, **dadurch gekennzeichnet, dass** die genannte Klappe (23) außerdem einem Moment ausgesetzt ist, das die genannten Klappe (23) in die genannte geöffnete Position (A) drehen soll, das durch die Drücke des genannten Gasflusses auf die genannte Klappe (23) erzeugt wird.

3. Sicherheitsventil (1) nach Anspruch 2, **dadurch gekennzeichnet, dass** die genannte Klappe (23) geeignet ist, bei einem Gasfluss durch das genannte Sicherheitsventil (2) unter einem Grenzwert, in der geöffneten Position (A) zu bleiben, der in der Lage ist, ein Betätigungsmoment zu erzeugen, das unter der Summe des Moments liegt, das von den Drücken des genannten Gasflusses auf die genannte Klappe (23) und dem elastischen Moment durch die genannten nachgebenden elastischen Elementen (26) erzeugt wird.

4. Sicherheitsventil (1) nach Anspruch 2, **dadurch gekennzeichnet, dass** die genannte Klappe (23) in der Lage ist, sich aus der genannten geöffneten Position (A) in die genannte geschlossene Position (B) zu bewegen, wenn eine Erhöhung des Gasflusses über das genannte Sicherheitsventil (1) eintritt, die über einem Grenzwert liegt, die insbesondere durch das Eintreten eines Defekts in der Rohrleitung (2) nach dem genannten Sicherheitsventil (1) erzeugt wird, dem ein Betätigungsmoment auf die genannte Klappe (23) über der Summe des Moments entspricht, das von den Drücken des genannten Gasflusses auf die genannte Klappe (1) und dem elastischen Moment der genannten elastisch nachgiebigen Elementen (26) erzeugt wird.

5. Sicherheitsventil (1) nach einem beliebigen der vorangegangenen Ansprüche, **dadurch gekennzeichnet, dass** das Zusatzstück (7) mit einem Sitz (21) versehen ist, der sich auf der genannten Innenfläche (18) befindet und in der Lage ist, die genannte Klappe (23) in geöffneter Position (A) unterzubringen.

6. Sicherheitsventil (1) nach Anspruch 5, **dadurch gekennzeichnet, dass** die genannte Klappe (23) in genannter geöffneter Position (A) in den genannten Sitz (21) bis auf eine Tiefe eingesetzt wird, die sie vor dem genannten Gasfluss schützt.

7. Sicherheitsventil (1) nach einem beliebigen der vorangegangenen Ansprüche, **dadurch gekennzeichnet, dass** das freie Ende (17) des Zusatzstücks (7) verjüngt ist, um Lastverluste auszugleichen.

8. Sicherheitsventil (1) nach einem beliebigen der vorangegangenen Ansprüche, **dadurch gekennzeichnet, dass** die Außenfläche (19) des genannten Zusatzstücks (7) im Wesentlichen ein Gegenprofil zur Innenfläche der Rohrleitung (2) bildet, in die das genannte Sicherheitsventil (1) eingesetzt werden kann.

9. Sicherheitsventil (1) nach Anspruch 5, **dadurch gekennzeichnet, dass** es Abstandsstücke (50) umfasst, die auf der Außenfläche (24) der genannten Klappe (23) oder auf dem Boden des genannten Sitzes (21) positioniert und in der Lage sind, die genannte Klappe (23) vom Boden des genannten Sitzes (21) zu trennen.

10. Sicherheitsventil (1) nach Anspruch 9, **dadurch gekennzeichnet, dass** die genannten Abstandsstücke (50) aus Rippen, Zusatzstücken oder Füßen bestehen, die aus der Außenfläche (24) der genannten Klappe (23) oder vom Boden des genannten Sitzes (21) hervorstehen.

11. Sicherheitsventil (1) nach einem beliebigen der vorangegangenen Ansprüche, **dadurch gekennzeichnet, dass** die genannte Klappe (23) mit mindestens einem vorstehenden Flügel (28) ausgestattet ist, der in einer Nische (30) untergebracht ist, die sich auf der Basis des genannten Zusatzstücks (7) befindet; mindestens einem Zapfen (27), der auf den Seitenwänden der genannten Nische (30) abgestützt vorgesehen und in einen Durchgang eingesetzt ist, der quer in dem genannten Flügel (28) angebracht ist.

12. Sicherheitsventil (1) nach einem beliebigen der vorangegangenen Ansprüche, **dadurch gekennzeichnet, dass** der genannte Rohrkörper (6) mit einem ersten Rand (8) versehen ist, von dem aus das genannte Zusatzstück (7) verläuft, das eine aufgeweitete Form aufweist.

13. Sicherheitsventil (1) nach Anspruch 12, **dadurch gekennzeichnet, dass** auf dem genannten Rohrkörper (6) außen eine erste Dichtung (12) montiert ist, die insbesondere in einen ringförmigen Sitz (13) eingesetzt ist, der zwischen einer Hinterschneidung (14) unter dem ersten Rand (8) und einer ringförmigen Rippe (15) definiert ist und außen aus dem genannten Rohrkörper (6) hervorsteht und geeignet ist, auf der Innenfläche der genannten Rohrleitung (2) als Dichtung zu dienen.

14. Sicherheitsventil (1) nach einem beliebigen der vorangegangenen Ansprüche, **dadurch gekennzeichnet, dass** der genannte Rohrkörper (6) mit einem zweiten Rand (10) versehen ist, von dem aus eine ringförmige Lippe (11) verläuft, die geeignet ist, an der Mündung eines Abschnitts der genannten Gasrohrleitung (2) aufzuliegen.

15. Sicherheitsventil (1) nach Anspruch 12, **dadurch gekennzeichnet, dass** die genannte Klappe (23) ringförmig montiert eine zweite Dichtung (31) trägt, die geeignet ist, mit der genannten Klappe (23) in geschlossener Position (B) eine Dichtung auf dem genannten aufgeweiteten Rand (8) des genannten Rohrkörpers (6) zu bilden.

## Revendications

1. Valve de sécurité (1) pour conduites de gaz, destinée à être insérée dans une conduite de transport (2) du gaz pour en arrêter l'écoulement en cas de fuites en aval de ladite valve de sécurité (1), comprenant :
• une structure de support (5), destinée à être fixée à l'intérieur de ladite conduite de transport (2) du gaz et munie :
- d'un corps tubulaire (6) destiné à être monté coaxialement de façon étanche sur la surface interne de ladite conduite de transport (2) et à être traversé par ledit écoulement de gaz et
- d'une appendice (7) qui s'étend axialement dudit corps tubulaire (6), avec une surface interne (18) tournée vers l'axe dudit corps tubulaire (6) et une surface externe (19) destinée à se tourner vers la surface interne de ladite conduite (2),
• un clapet (23) articulé sur ladite structure de support (5) au niveau dudit corps tubulaire (6), muni d'une face externe (24) tournée vers ladite appendice (7) et d'une face interne (25) tournée vers ledit corps tubulaire (6), mobile entre une position ouverte (A), dans laquelle est approché de ladite appendice (7), et une position fermée (B), dans laquelle sert de fermeture audit corps tubulaire (6) pour arrêter ledit écoulement de gaz ;
• des moyens élastiquement souples (26) agissant sur ledit clapet (23) pour le forcer par un moment élastique vers ladite position ouverte (A) ;
ledit clapet (23) étant soumis à au moins
- un moment élastique destiné à faire tourner ledit clapet (23) vers ladite position ouverte (A) ;
**caractérisé en ce que** ledit clapet (23) est en outre soumis à :
- un moment d'actionnement destiné à faire tourner ledit clapet (23) vers ladite position fermée (B), généré par la poussée dudit écoulement de gaz sur une saillie (32) s'étendant de la face interne (25) dudit clapet (23), laquelle avec ledit clapet (23) en position ouverte (A) est susceptible d'interférer avec ledit écoulement de gaz passant à travers ladite valve de sécurité (1).

2. Valve de sécurité (1) selon la revendication 1, **caractérisée en ce que** ledit clapet (23) est soumis ultérieurement à un mouvement destiné à faire tourner ledit clapet (23) vers ladite position ouverte (A), généré par les pressions dudit écoulement de gaz sur ledit clapet (23).

3. Valve de sécurité (1) selon la revendication 2, **caractérisée en ce que** ledit clapet (23) est apte à rester en position ouverte (A) avec un écoulement de gaz à travers ladite valve de sécurité (1) inférieur à une valeur de seuil, susceptible de générer un moment d'actionnement inférieur à la somme du moment produit par les pressions dudit écoulement de gaz sur ledit clapet (23) et du moment élastique produit par lesdits moyens élastiquement souples (26).

4. Valve de sécurité (1) selon la revendication 2, **caractérisée en ce que** ledit clapet (23) est susceptible de se déplacer de ladite position ouverte (A) à ladite position fermée (B) à la suite d'une augmentation de l'écoulement de gaz, à travers ladite valve de sécurité (1), supérieure à la valeur de seuil, notamment produite par un événement de panne dans la conduite de transport (2) en aval de ladite même valve de sécurité (1), à laquelle correspond un moment d'actionnement sur ledit clapet (23) supérieur à la somme du moment produit par les pressions dudit écoulement de gaz sur ledit clapet (1) et du moment élastique desdits moyens élastiquement souples (26).

5. Valve de sécurité (1) selon une quelconque des revendications précédentes, **caractérisée en ce que** l'appendice (7) est munie d'un siège (21) situé au niveau de ladite surface interne (18), susceptible de loger ledit clapet (23) en position ouverte (A).

6. Valve de sécurité (1) selon la revendication 5, **caractérisée en ce que** ledit clapet (23) en ladite position ouverte (A) est introduit dans ledit siège (21) à une profondeur qui le protège dudit écoulement de gaz.

7. Valve de sécurité (1) selon une quelconque des revendications précédentes, **caractérisée en ce que** l'extrémité libre (17) de l'appendice (7) est diminuée pour réduire les pertes de charge.

8. Valve de sécurité (1) selon une quelconque des revendications précédentes, **caractérisée en ce que** la surface externe (19) de ladite appendice (7) est essentiellement contreprofilée par rapport à la surface interne de la conduite de transport (2) dans laquelle ladite valve de sécurité (1) est susceptible de s'insérer.

9. Valve de sécurité (1) selon la revendication 5, **caractérisée en ce qu'**elle comprend des moyens-entretoises (50) positionnés sur la face externe (24) dudit clapet (23) ou sur le fond dudit siège (21) et aptes à séparer ledit clapet (23) du fond dudit siège (21).

10. Valve de sécurité (1) selon la revendication 9, **caractérisée en ce que** lesdits moyens-entretoises (50) sont constitués de nervures, appendices ou pieds saillant de la face externe (24) dudit clapet (23) ou du fond dudit siège (21).

11. Valve de sécurité (1) selon une quelconque des revendications précédentes, **caractérisée en ce que** ledit clapet (23) est muni d'au moins une aile saillante (28), laquelle est logée dans une niche (30) située à la base de ladite appendice (7) ; au moins un axe (27) étant prévu monté sur les faces latérales de ladite niche (30) et inséré dans un trou traversant percé transversalement dans ladite aile (28).

12. Valve de sécurité (1) selon une quelconque des revendications précédentes, **caractérisée en ce que** ledit corps tubulaire (6) est muni d'un premier bord (8) duquel sort ladite appendice (7), lequel est pourvu d'une forme évasée.

13. Valve de sécurité (1) selon la revendication 12, **caractérisée en ce que** ledit corps tubulaire (6) porte, monté à l'extérieur un premier joint (12), notamment inséré dans un siège annulaire (13) défini entre une contre-dépouille (14) située au-dessous dudit premier bord (8) et une nervure annulaire (15) dépassant à l'extérieur dudit corps tubulaire (6), apte a fournir étanchéité à la surface interne de ladite conduite de transport (2).

14. Valve de sécurité (1) selon une quelconque des revendications précédentes, **caractérisée en ce que** ledit corps tubulaire (6) est muni d'un second bord (10) duquel se développe une lèvre annulaire (11) susceptible de venir en appui sur la bouche d'une section de ladite conduite de transport (2) du gaz.

15. Valve de sécurité (1) selon la revendication 12, **caractérisée en ce que** ledit clapet (23) porte, monté en mode annulaire, un second joint (31) apte à fournir étanchéité avec ledit clapet (23) en position fermée (B) sur ledit premier bord évasé (8) dudit corps tubulaire (6).
